# EUROPEAN PATENT APPLICATION

(11) **EP 4 768 766 A1**
(43) Date of publication of application: **01.07.2026**
(21) Application number: 25225264.8
(22) Date of filing: 18.12.2025
(51) Int. Cl.: F16K 31/385, F16K 31/524, F16K 31/56, F16K 1/52

(54) **PUSH-OPERATED WATER ON-OFF AND ROTARY FLOW-ADJUSTING VALVE CORE, SHOWER, SHOWER CONTROLLER AND FAUCET**

(30) Priority: 31.12.2024 CN 202411985446
(71) Applicant: Zhangzhou Solex Smart Home Co., Ltd., Changtai County Zhangzhou City, Fujian Province 363900 (CN)
(72) Inventor: LIN, Fangqi, Zhangzhou City, 363900 (CN); HU, Lihong, Zhangzhou City, 363900 (CN); ZHANG, Huafeng, Zhangzhou City, 363900 (CN); CHEN, Donghai, Zhangzhou City, 363900 (CN)
(74) Representative: Verscht, Thomas Kurt Albert

(57) **Abstract**

The present disclosure discloses a push-operated water on-off and rotary flow-adjusting valve core, a push operation member (2) is used to drive a central rod (4) and a first sealing component to move between a first position and a second position; when the central rod and the first sealing component are at the first position, the first sealing component seals a communication between a water inlet (13) and the first flow passage, and the central rod cooperates with the second sealing component to close the second flow passage (14); when the central rod and the first sealing component are at the second position, the first sealing component opens the communication between the water inlet and the first flow passage, and the central rod disengages from the second sealing component to open the second flow passage; and a rotary adjusting member (3) is used to control the first sealing component to move between the second position and a third position through a linkage control mechanism to adjust a water outlet flow rate of the first flow passage when the central rod is at the second position. The present disclosure further discloses a shower, a shower controller and a faucet assembled with the push-operated water on-off and rotary flow-adjusting valve core.

## Description

### RELATED APPLICATIONS

This application claims priority to Chinese patent application number 202411985446.4, filed on December 31, 2024. Chinese patent application number 202411985446.4 is incorporated herein by reference.

### FIELD OF THE DISCLOSURE

The present disclosure relates to sanitary ware products, and in particular relates to a valve core for water on-off and flow adjustment.

### BACKGROUND OF THE DISCLOSURE

The push-operated valve core switch can achieve two functions of push-operated on-off water outflow and rotary flow rate adjustment. However, a function of the rotary flow rate adjustment is not stable enough, and it is prone to a problem of large individual differences in minimum flow rate.

### BRIEF SUMMARY OF THE DISCLOSURE

The main technical problem to be solved by the present disclosure is to provide a push-operated water on-off and rotary flow-adjusting valve core to improve control accuracy and stability of a flow rate of a product.
In order to solve the aforementioned technical problems, the present disclosure discloses a push-operated water on-off and rotary flow-adjusting valve core, characterized in that: which comprises a valve body, a push operation member, a rotary adjusting member and a central rod;
The valve body comprises a water inlet, a water outlet, and a first flow passage and a second flow passage communicating between the water inlet and the water outlet;
A first sealing component and a second sealing component are disposed at different positions in the valve body; the push operation member is used to drive the central rod and the first sealing component to move between a first position and a second position; when the central rod and the first sealing component are at the first position, the first sealing component seals the first flow passage, and the central rod cooperates with the second sealing component to close the second flow passage; when the central rod and the first sealing component are at the second position, the first sealing component opens the first flow passage, and the central rod disengages from the second sealing component to open the second flow passage;
The rotary adjusting member is used to control the first sealing component to move between the second position and a third position through a linkage control mechanism to adjust a water outlet flow rate of the first flow passage when the central rod and the first sealing component are at the second position; the third position is between the second position and the first position; and when the central rod and the first sealing component are at the third position, the first sealing component seals the first flow passage, and the second flow passage maintains communication with the water inlet.

In a preferred embodiment, the first sealing component is a pilot valve, which comprises a pilot valve seat and a diaphragm fixed to the pilot valve seat.
In a preferred embodiment, the pilot valve comprises a water supplement port and a pressure relief hole for the central rod to pass through; and the pilot valve and the valve body form a pressure chamber;

The linkage control mechanism controls the central rod to move relative to the pressure relief hole to adjust a size of the pressure relief hole, so as to adjust a magnitude of a pressure inside the pressure chamber, so that the pilot valve moves between the second position and the third position under a pressure difference between inside and outside of the pressure chamber.
In a preferred embodiment, the central rod comprises a first part and a second part, and a diameter of the second part is larger than that of the first part;

When the central rod is at the first position, the second part is disposed in the pressure relief hole and seals the pressure relief hole, and the diaphragm seals the first flow passage under the pressure inside the pressure chamber; and when the central rod is at the second position, the first part is disposed in the pressure relief hole and opens the pressure relief hole, and the diaphragm opens the first flow passage under a pressure outside the pressure chamber.
In a preferred embodiment, the linkage control mechanism is a guide seat; and when the central rod is at the second position, the guide seat is in linkage fit with the central rod;

The guide seat is in commutation fit with the rotary adjusting member to convert a rotation of the rotary adjusting member into a movement of the central rod from the second position to the third position.
In a preferred embodiment, the central rod further comprises a transition part between the first part and the second part, and a diameter of the transition part gradually increases from an end close to the first part to the other end;

During the movement of the central rod from the second position to the third position, the transition part enters into the pressure relief hole to gradually reduce a water passing area of the pressure relief hole; and when the central rod moves to the third position, the second part is disposed in the pressure relief hole and seals the pressure relief hole, and the diaphragm seals the first flow passage under the pressure inside the pressure chamber.

In a preferred embodiment, the guide seat comprises an avoidance opening for the push operation member to pass through, an inner wall of the avoidance opening extends radially inward to form a position-limiting surface, an upper end of the central rod extends radially outward to form a matching position-limiting surface, and when the central rod is at the second position, the position-limiting surface is in abutting fit with the matching position-limiting surface.

In a preferred embodiment, the rotary adjusting member is sleeved over an outer side of the guide seat, the guide seat extends radially outward to form a lug in abutting fit with a lower end surface of the rotary adjusting member, and the lower end surface of the rotary adjusting member is an inclined surface that gradually rises along a rotation direction; and when the lug moves to a highest position of the inclined surface, the central rod is at the second position, and when the lug moves to a lowest position of the inclined surface, the central rod is at the third position.

In a preferred embodiment, the rotary adjusting member directly acts on the pilot valve through the linkage control mechanism to drive the pilot valve to move between the second position and the third position.

In a preferred embodiment, the linkage control mechanism is an adjusting seat; the adjusting seat is in commutation fit with the rotary adjusting member to convert the rotation of the rotary adjusting member into a movement of the adjusting seat from the second position to the third position.

In a preferred embodiment, the pilot valve and the valve body form a pressure chamber; the adjusting seat comprises a convex column extending into the pressure chamber; when the rotary adjusting member rotates to drive the adjusting seat to move, the convex column drives the pilot valve to move between the second position and the third position to adjust the water outlet flow rate of the first flow passage.

In a preferred embodiment, the adjusting seat extends radially outward to form a lug in abutting fit with a lower end surface of the rotary adjusting member, and the lower end surface of the rotary adjusting member is an inclined surface that gradually rises along a rotation direction; and when the lug moves to a highest position of the inclined surface, the diaphragm is at the second position, and when the lug moves to a lowest position of the inclined surface, the diaphragm is at the third position.

In a preferred embodiment, the adjusting seat abuts an adjusting spring, and the adjusting spring accumulates elastic reset force during the movement of the adjusting seat from the second position to the third position.

In a preferred embodiment, the second flow passage is disposed below the first flow passage; the central rod further comprises a third part at an end of the first part away from the second part, and an inner wall of the second flow passage comprises a first sealing ring used as the second sealing component; when the central rod is at the first position, the third part is in sealing fit with the first sealing ring.

In a preferred embodiment, the second flow passage comprises the pressure relief hole.

In a preferred embodiment, the pilot valve seat comprises the second flow passage, and the diaphragm comprises an avoidance opening at a position corresponding to an outlet of the second flow passage.

In a preferred embodiment, the pilot valve seat comprises a first avoidance channel for the central rod to pass through, and an inner wall of the first avoidance channel comprises a sealing member used as the second sealing component.
In a preferred embodiment, the central rod comprises a first part and a second part, and a diameter of the second part is larger than that of the first part;

When the central rod is at the first position, the second part is disposed in the pressure relief hole and seals the pressure relief hole, the diaphragm seals the first flow passage under the pressure inside the pressure chamber, and the second part cooperates with the sealing member to close the second flow passage; and when the central rod is at the second position, the first part is disposed in the pressure relief hole and opens the pressure relief hole, the diaphragm opens the first flow passage under a pressure outside the pressure chamber, and the second part disengages from the sealing member to open the second flow passage.
In a preferred embodiment, the push operation member comprises a handle rod, and a boss is fixedly disposed in the handle rod; and a water-on spring is sleeved over an outer side of the central rod;

The handle rod is at a high position or a low position under external force, when the handle rod is at the low position, the boss abuts the central rod to drive the central rod to be at the first position, and the central rod squeezes the water-on spring to accumulate elastic reset force; and when the handle rod is at the high position, the boss is separated from the central rod, and the central rod is driven to move to the second position by the reset force of the water-on spring.

In a preferred embodiment, a side surface of the handle rod comprises a groove, and the rotary adjusting member comprises a protrusion for being placed in the groove, so that the handle rod and the rotary adjusting member are in linkage fit in the rotation direction.

In a preferred embodiment, the valve body comprises a shell wrapping an outer side of the rotary adjusting member, and the shell comprises a first position-limiting boss along a rotation path of the rotary adjusting member; the rotary adjusting member comprises a second position-limiting boss corresponding to the first position-limiting boss; and the first position-limiting boss and the second position-limiting boss are used to limit a rotation range of the rotary adjusting member.

The present disclosure further discloses a shower, which comprises a shower rod, an overhead shower head and a hand-held shower head, which further comprises the push-operated water on-off and rotary flow-adjusting valve core.

The present disclosure further discloses a shower controller, which comprises a temperature-regulating valve core, a cold water flow path and a hot water flow path are connected to the temperature-regulating valve core to output mixed water, the push-operated water on-off and rotary flow-adjusting valve core is further disposed downstream of the temperature-regulating valve core.

The present disclosure further discloses a faucet, which is assembled with the push-operated water on-off and rotary flow-adjusting valve core.

Compared with the existing techniques, the technical solution has the following advantages.

The present disclosure provides a push-operated water on-off and rotary flow-adjusting valve core, by setting the second flow passage, during a rotary flow-adjusting process, a size of the first flow passage can be adjusted by rotation, the second flow passage remains in a normally open state with a fixed and non-adjustable flow rate, and water from two paths converges for discharge, so that a minimum flow rate of a product is determined by the second flow passage. When the first flow passage is adjusted by rotation so that the flow rate of the first flow passage is zero, a minimum flow rate of the valve core is a flow rate of the second flow passage, and the flow rate is stable, so that a value of the minimum flow rate of the product can be accurately controlled within a small flow rate range during mass production, and control accuracy and stability of the flow rate of the product are improved.

### BRIEF DESCRIPTION OF THE DRAWINGS

Fig. 1 illustrates a perspective view of a push-operated water on-off and rotary flow-adjusting valve core in a preferred Embodiment 1 of the present disclosure;
Fig. 2 illustrates an exploded view of the push-operated water on-off and rotary flow-adjusting valve core in the preferred Embodiment 1 of the present disclosure;
Fig. 3 illustrates a cross-sectional exploded view of the push-operated water on-off and rotary flow-adjusting valve core in the preferred Embodiment 1 of the present disclosure;
Fig. 4 illustrates a cross-sectional view of the preferred Embodiment 1 of the present disclosure when a central rod is at a second position;
Fig. 5 illustrates a cross-sectional view of the preferred Embodiment 1 of the present disclosure when the central rod is at a third position;
Fig. 6 illustrates a cross-sectional view of the preferred Embodiment 1 of the present disclosure when the central rod is at a first position;
Fig. 7 illustrates an exploded view of a push-operated water on-off and rotary flow-adjusting valve core in a preferred Embodiment 2 of the present disclosure;
Fig. 8 illustrates a cross-sectional exploded view of the push-operated water on-off and rotary flow-adjusting valve core in the preferred Embodiment 2 of the present disclosure;
Fig. 9 illustrates a cross-sectional view in the preferred Embodiment 2 of the present disclosure when a central rod is at a second position;
Fig. 10 illustrates a cross-sectional view in the preferred Embodiment 2 of the present disclosure when the central rod is at a third position;
Fig. 11 illustrates a cross-sectional view in the preferred Embodiment 2 of the present disclosure when the central rod is at a first position;
Fig. 12 illustrates a cross-sectional view in a preferred Embodiment 3 of the present disclosure when a central rod is at a second position;
Fig. 13 illustrates a cross-sectional view in the preferred Embodiment 3 of the present disclosure when the central rod is at a third position;
Fig. 14 illustrates a cross-sectional view in the preferred Embodiment 3 of the present disclosure when the central rod is at a first position;
Fig. 15 illustrates a cross-sectional view of a pilot valve in the preferred Embodiment 3 of the present disclosure;
Fig. 16 illustrates a diagrammatic view of a shower in the preferred Embodiment 3 of the present disclosure;
Fig. 17 illustrates a waterway diagram of a shower controller in a preferred Embodiment 4 of the present disclosure;
Fig. 18 illustrates a diagrammatic view of the shower controller in the preferred Embodiment 4 of the present disclosure;
Fig. 19 illustrates a diagrammatic view of a fixed faucet in a preferred Embodiment 5 of the present disclosure; and
Fig. 20 illustrates a diagrammatic view of a pulling faucet in the preferred Embodiment 5 of the present disclosure.

### DETAILED DESCRIPTION OF THE EMBODIMENTS

The technical solutions in the embodiments of the present disclosure will be clearly and completely described below in conjunction with the accompanying drawings in the embodiments of the present disclosure; it is obvious that the described embodiments are only some of the embodiments of the present disclosure rather than all embodiments, all other embodiments fall within the protection scope of the present disclosure provided that they are obtained by those of ordinary skill in the art without creative work based on the embodiments of the present disclosure.

In the description of the present disclosure, it should be noted that the terms, such as "upper", "lower", "inner", "outer", "top/bottom ends", indicate orientation or positional relationship based on orientation or positional relationship shown in the accompanying drawings and are only for convenience of describing the present disclosure and simplifying the description, rather than indicating or implying that a referenced valve core or element should have a specified orientation or be constructed and operated in the specified orientation, and this should not be understood as a limitation of the present disclosure. In addition, the terms of "first" and "second" are only used for descriptive purposes and cannot be understood as indicating or implying relative importance.

In the description of the present disclosure, unless otherwise clearly specified and limited, it should be noted that the terms, such as "install", "dispose", "sleeve/sleeve connection", "connect", should develop a broad understooding, for example, "connect" can be a wall-mounted connection, a detachable connection, an integrated connection, a mechanical connection, an electrical connection, a direct connection, an indirect connection through an intermediate medium, or communication between inner portions of two elements, for those of ordinary skill in the art, the specific meanings of the terms in the present disclosure can be understood according to specific situations.

### Embodiment 1

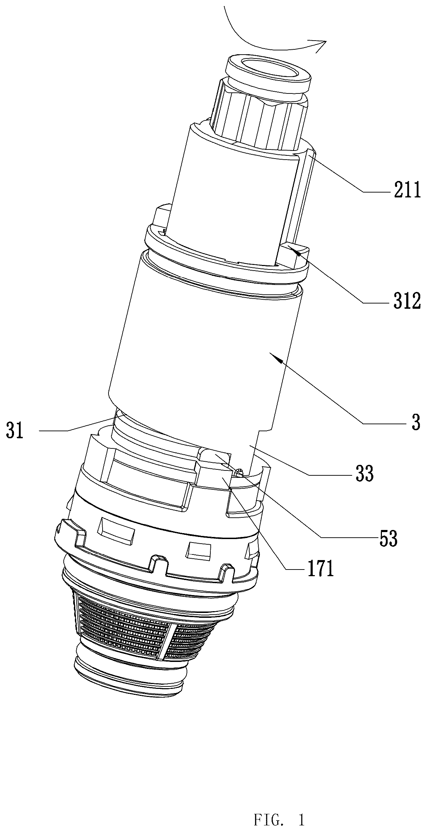

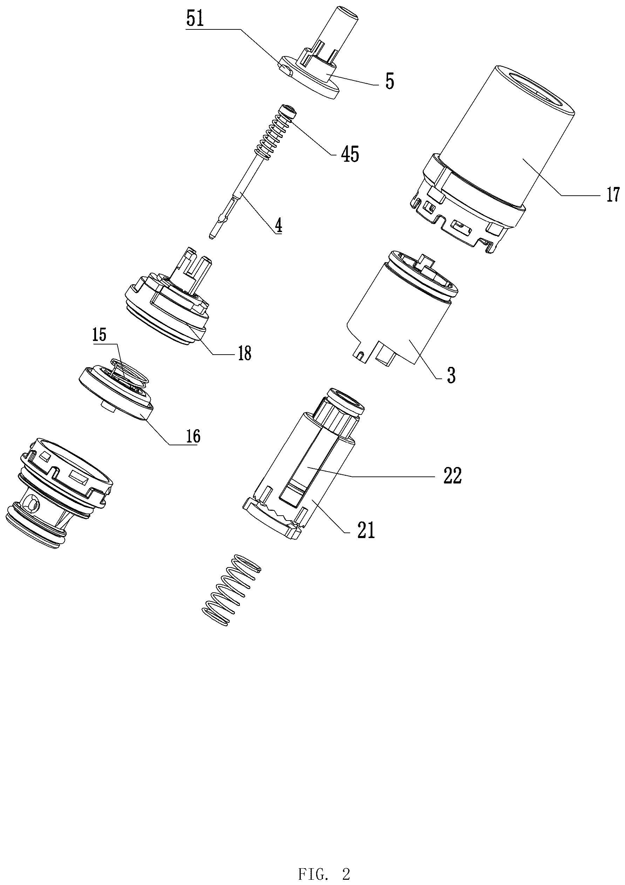

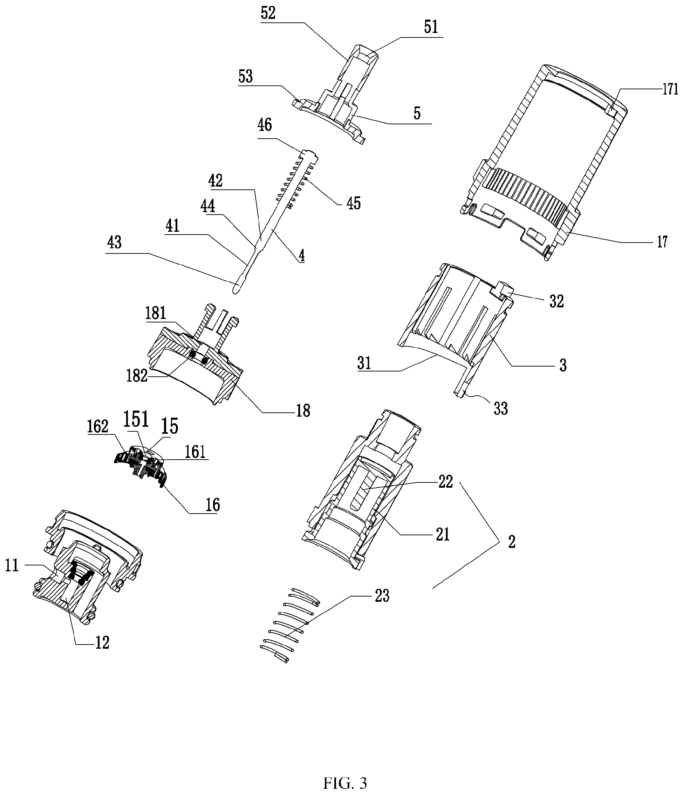

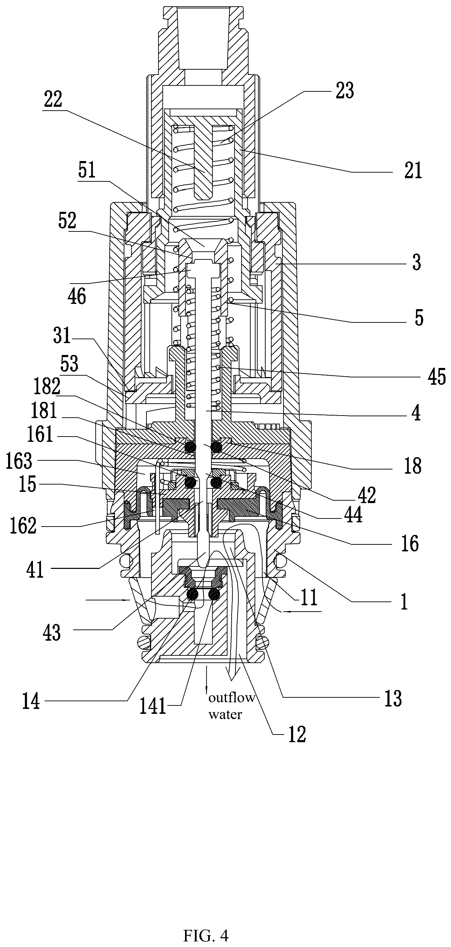

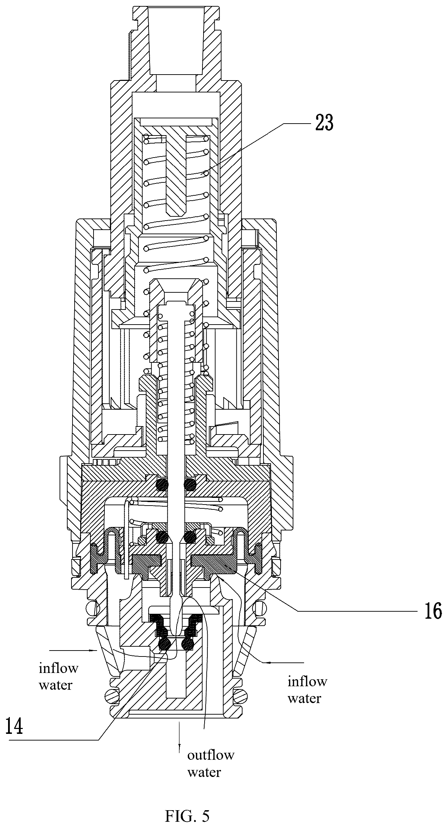

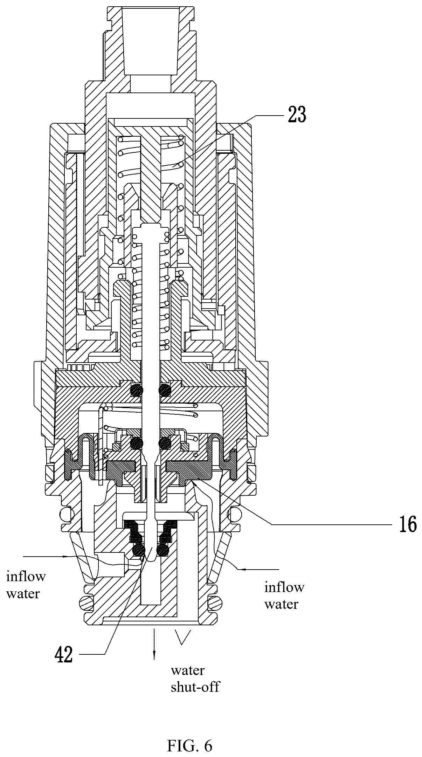

Referring to FIGS. 1-6, this embodiment provides a push-operated water on-off and rotary flow-adjusting valve core, which comprises a valve body 1, a push operation member 2, a rotary adjusting member 3 and a central rod 4;
The valve body 1 comprises a water inlet 11 and a water outlet 12, and a first flow passage 13 and a second flow passage 14 communicating between the water inlet 11 and the water outlet 12;
A first sealing component and a second sealing component are disposed at different positions in the valve body 1; the push operation member 2 is used to drive the central rod 4 and the first sealing component to move between a first position and a second position; when the central rod 4 and the first sealing component are at the first position, the first sealing component seals the first flow passage 13, and the central rod 4 cooperates with the second sealing component to seal the second flow passage 14; when the central rod 4 and the first sealing component are at the second position, the first sealing component opens the first flow passage 13, and the central rod 4 disengages from the second sealing component to open the second flow passage 14;
The rotary adjusting member is used to control the first sealing component to move between the second position and a third position through a linkage control mechanism to adjust a water outlet flow rate of the first flow passage 13 when the central rod 4 and the first sealing component are at the second position, and the third position is between the second position and the first position; during a movement of the first sealing component between the second position and the third position controlled by the rotary adjusting member through the linkage control mechanism, the first sealing component has 1, 2, 3, 4, 5......, n positions, and the rotary adjusting member can control the first sealing component to stay at any one of the n positions, when staying at different positions, the water outlet flow rate of the first flow passage 13 will vary, so as to achieve a stepless flow rate adjustment; and when the central rod 4 and the first sealing component are at the third position, the first sealing component seals the first flow passage 13, and the second flow passage 14 maintains communication with the water inlet 11.

The aforementioned push-operated water on-off and rotary flow-adjusting valve core, by setting the second flow passage 14, during a rotary flow-adjusting process, a size of the first flow passage 13 can be adjusted by rotation, the second flow passage 14 remains in a normally open state with a fixed and non-adjustable flow rate, water from two paths converges for discharge, so that a minimum flow rate of a product is determined by the second flow passage 14. When the first flow passage 13 is adjusted by rotation so that a flow rate of the first flow passage 13 is zero, a minimum flow rate of the valve core is a flow rate of the second flow passage 14, and the flow rate is stable, so that a value of the minimum flow rate of the product can be accurately controlled within a small flow rate range during mass production, and control accuracy and stability of the flow rate of the product are improved.
To achieve water on-off, the first sealing component is a pilot valve, which comprises a pilot valve seat 15 and a diaphragm 16 fixed to the pilot valve seat 15, and the second sealing component is a first sealing ring 141 disposed in the second flow passage 14. The pilot valve comprises a pressure relief hole 161 for the central rod 4 to pass through and a water supplement port 162 with a diameter smaller than that of the pressure relief hole 161; the pilot valve and a middle seat 18 of the valve body 1 form a pressure chamber 163; and the central rod 4 comprises a first part 41 and a second part 42, and a diameter of the second part 42 is larger than that of the first part 41;

When the central rod 4 is at the first position, the second part 42 is disposed in the pressure relief hole 161 and seals the pressure relief hole 161, external water enters into the pressure chamber 163 through the water supplement port 162 so that a pressure inside the pressure chamber 163 increases, the pilot valve moves downward due to the pressure inside the pressure chamber 163, the pilot valve seat 15 on the pilot valve moves downward to drive the diaphragm 16 to deform downward to seal the first flow passage 13, achieving water shut-off of the first flow passage 13; when the central rod 4 is at the second position, the first part 41 is disposed in the pressure relief hole 161, as a diameter of the first part 41 is relatively small, there is a gap between the first part 41 and the pressure relief hole 161 to open the pressure relief hole 161, the water in the pressure chamber 163 flows out of the pressure relief hole 161, resulting in a decrease in the water pressure inside the pressure chamber 163, a pressure outside the pressure chamber 163 is greater than the pressure inside the pressure chamber 163, at this time, the pilot valve moves upward under the pressure outside the pressure chamber 163, and the pilot valve drives the diaphragm 16 fixed in the pilot valve seat 15 to deform upward to release the seal of the first flow passage 13, achieving water turn-on of the first flow passage 13.

In addition, in this embodiment, the second flow passage 14 is disposed below the first flow passage 13; when the pilot valve moves downward to drive the diaphragm 16 fixed to the pilot valve seat 15 to deform downward to seal the first flow passage 13, communication through the second flow passage 14 will not be affected so as to ensure that the second flow passage 14 always remains open during the flow-adjusting process.

To close the second flow passage 14 when the central rod 4 is at the first position, the central rod 4 further comprises a third part 43 at an end of the first part 41 away from the second part 42, and the first sealing ring 141 is disposed on an inner wall of the second flow passage 14; and when the central rod 4 is at the third position, the third part 43 is away from the first sealing ring 141, and the second flow passage 14 is in an open state. When the central rod 4 continues to move downward from the third position to the first position, the third part is in sealing fit with the first sealing ring 141 to close the second flow passage 14, achieving water stop of the entire valve core.
Therefore, to achieve water on-off operation, the central rod 4 can move from the first position to the second position or from the second position to the first position, and the push operation member 2 needs to be pushed to drive the central rod 4 to move. Specifically, the push operation member 2 comprises a handle rod 21, and a boss 22 is fixedly disposed in the handle rod 21; and a water-on spring 45 is sleeved over an outer side of the central rod 4;

The handle rod 21 is at a high position or a low position under external force, when the handle rod 21 is at the low position, the boss 22 abuts the central rod 4 to drive the central rod 4 to be at the first position, and the central rod 4 squeezes the water-on spring 45 to accumulate elastic reset force; when the handle rod 21 is at the high position, the boss 22 is separated from the central rod 4, and the central rod 4 is driven to move to the second position by the reset force of the water-on spring 45. For resetting the handle rod 21, the handle rod 21 also needs to be connected to a reset spring 23, and when the handle rod 21 is at the low position, the reset spring 23 accumulates elastic reset force.

The aforementioned structure can achieve water shut-off and water turn-on operations. Therefore, a flow-adjusting operation in a water-on state needs to rely on the rotary adjusting member 3 and the linkage control mechanism, and in this embodiment, the linkage control mechanism is a guide seat 5; when the central rod 4 is at the second position, the guide seat 5 is in linkage fit with the central rod 4 along a direction from the second position to the third position; and the guide seat 5 is in commutation fit with the rotary adjusting member 3 to convert a rotation of the rotary adjusting member 3 into a movement of the central rod 4 from the second position to the third position. In this way, a function of the guide seat 5 is to convert the rotation of the rotary adjusting member 3 into an axial movement of the central rod 4 through the guide seat 5 by the commutation fit of the guide seat 5 and the rotary adjusting member 3. Thus, when the central rod 4 is at the second position, the guide seat 5 is in linkage fit with the central rod 4 along the direction from the second position to the third position. As long as the user rotates the rotary adjusting member 3, the central rod 4 can be driven to move along the direction from the second position to the third position.

To achieve flow adjustment, the water output rate of the first flow passage 13 should gradually decrease during the movement of the central rod 4 from the second position to the third position. Therefore, the central rod 4 further comprises a transition part 44 between the first part 41 and the second part 42, and a diameter of the transition part 44 gradually increases from an end close to the first part 41 to the other end; in this way, during the movement of the central rod 4 from the second position to the third position, the transition part 44 will gradually enter into the pressure relief hole 161 to gradually reduce a water passing area of the pressure relief hole 161, so that the pressure inside the pressure chamber 163 will gradually increase again, so that the pilot valve moves downward to drive the diaphragm 16 to deform downward, in this way, a distance between the diaphragm 16 and the first flow passage 13 decreases, and the water output rate also decreases; and when the central rod 4 moves to the third position, the second part 42 is disposed in the pressure relief hole 161 and seals the pressure relief hole 161, and the diaphragm 16 seals the first flow passage 13 under the pressure inside the pressure chamber 163 to close the first flow passage 13. At this time, only the second flow passage 14 discharges the water, the valve core reaches the minimum flow rate and the flow rate is stable.

In this embodiment, as the guide seat 5 covers the outer side of the central rod 4, in order to allow the boss 22 to pass through the guide seat 5 to contact the central rod 4, a top of the guide seat 5 comprises an avoidance opening 51 for the push operation member 2 to pass through, an inner wall of the avoidance opening 51 extends radially inward to form a position-limiting surface 52, an upper end of the central rod 4 extends radially outward to form a matching position-limiting surface 46, and when the central rod 4 is at the second position, the position-limiting surface 52 is in abutting fit with the matching position-limiting surface 46. In this way, when the water-on spring 45 releases the elastic reset force, an upward movement position of the central rod 4 will be limited by the position-limiting surface 52 and the matching position-limiting surface 46, so that the central rod 4 can be accurately reset to the second position.

To achieve the commutation fit of the rotary adjusting member 3 and the guide seat 5, in this embodiment, the rotary adjusting member 3 is sleeved over an outer side of the guide seat 5, the guide seat 5 extends radially outward to form a lug 53 in abutting fit with a lower end surface of the rotary adjusting member 3, and the lower end surface of the rotary adjusting member 3 is an inclined surface 31 that gradually rises along a rotation direction; in this way, when the rotary adjusting member 3 rotates relative to the guide seat 5, the lug 53 on the guide seat 5 will move to different positions of the inclined surface 31, for example, when the lug 53 moves to a highest position of the inclined surface 31, the central rod 4 is at the second position, and when the lug 53 moves to a lowest position of the inclined surface 31, the central rod 4 is at the third position. When the lug 53 moves from the highest position to the lowest position of the inclined surface 31, an extrusion force is generated between the inclined surface 31 and the lug 53 to drive the guide seat 5 to move downward, and at this time, the guide seat 5 drives the central rod 4 to squeeze the water-on spring 45. When the lug 53 moves from the lowest position to the highest position of the inclined surface 31, the water-on spring 45 releases the elastic reset force to drive the guide seat 5 and the central rod 4 to move upward.

To form the aforementioned pressure chamber 163, the valve body 1 further comprises a middle seat 18, the middle seat 18 and the diaphragm 16 define the pressure chamber 163, and the middle seat 18 comprises a second avoidance channel 181 for the central rod 4 to pass through; and a second sealing ring 182 adapted to the central rod 4 is disposed on an inner wall of the second avoidance channel 181. In this way, the central rod 4 forms a sealing fit with the second avoidance channel 181 via the second sealing ring 182 to avoid water leakage during passage. Similarly, the pilot valve seat 15 also comprises a first avoidance channel 151 for the central rod 4 to pass through.

In the aforementioned structure, the water on-off operation is achieved by pushing the handle rod 21, and the flow-adjusting operation is achieved by rotating the rotary adjusting member 3, which requires pushing and rotating different parts of the valve core, and operation logic is not friendly enough. Therefore, in this embodiment, a side surface of the handle rod 21 comprises a groove 211, and the rotary adjusting member 3 comprises a protrusion 312 for being placed in the groove 211, so that the handle rod 21 and the rotary adjusting member 3 are in linkage fit in the rotation direction. In this way, the handle rod 21 rotates to also drive the rotary adjusting member 3 to rotate, and all user operations can be achieved through the handle rod 21.

Finally, to limit a rotation range of the rotary adjusting member 3, the valve body 1 comprises a shell 17 wrapping an outer side of the rotary adjusting member 3, and the shell 17 comprises a first position-limiting boss 171 along a rotation path of the rotary adjusting member 3; the rotary adjusting member 3 comprises a second position-limiting boss 32 corresponding to the first position-limiting boss 171; and the first position-limiting boss 171 and the second position-limiting boss 32 are used to limit the rotation range of the rotary adjusting member 3. In this way, when the rotary adjusting member 3 rotates until the first position-limiting boss 171 abuts the second position-limiting boss 32, the rotary adjusting member 3 stops to rotate along the current rotation direction.

### Embodiment 2

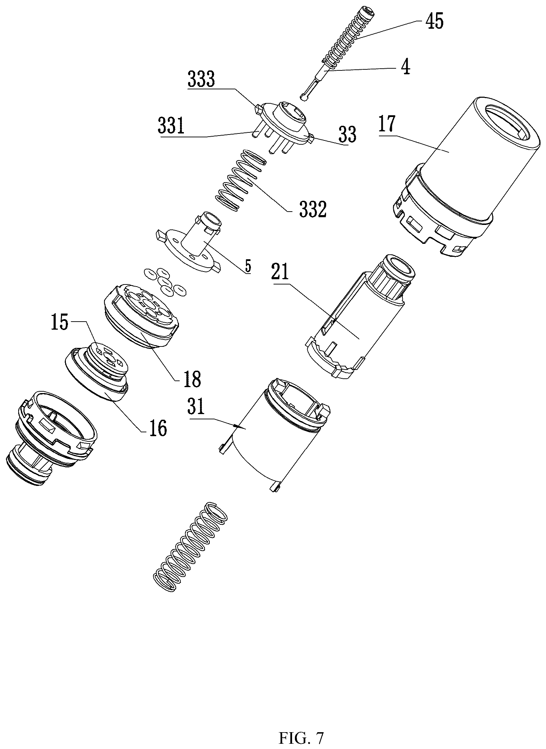

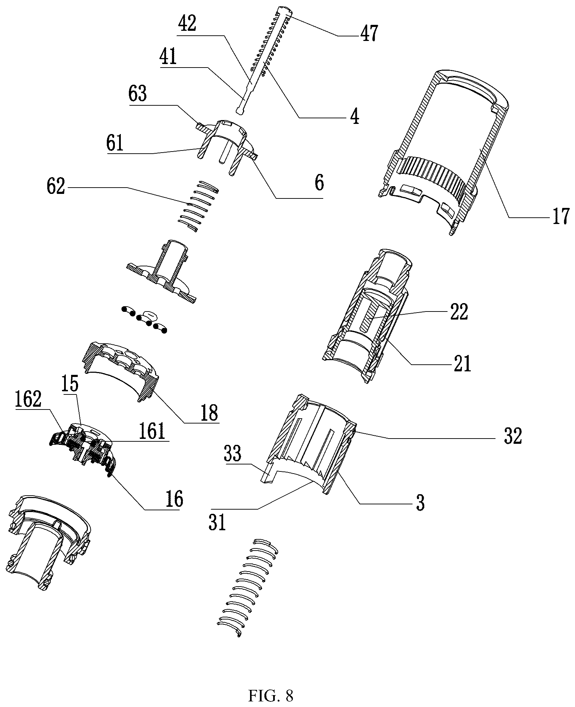

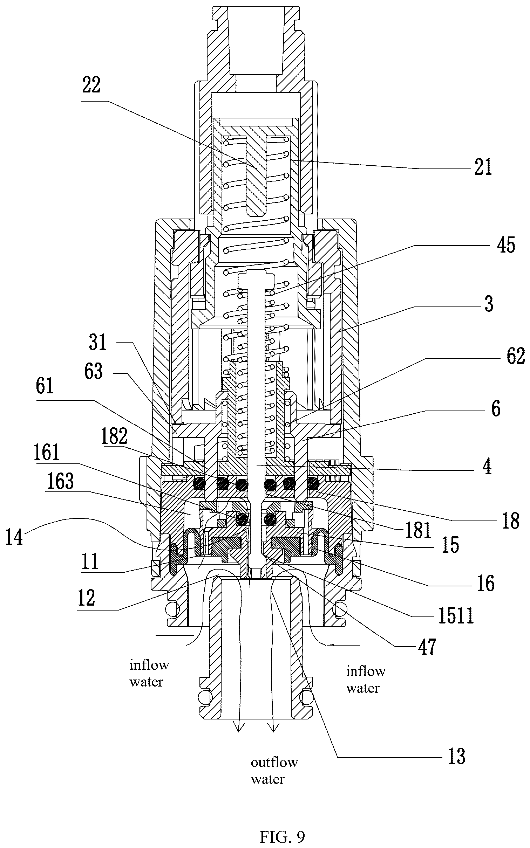

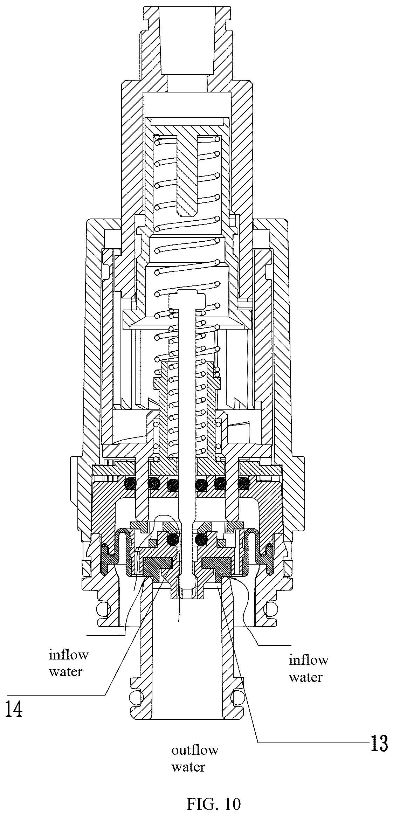

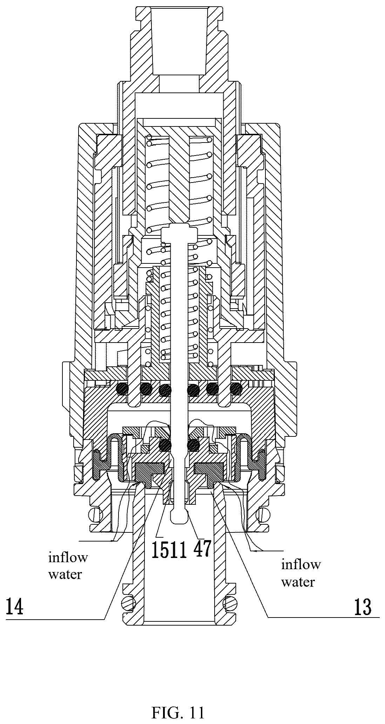

In this embodiment, the same components as those in Embodiment 1 adopt the same reference numerals, which is hereby stated.
Referring to FIGS. 7-11, this embodiment provides a push-operated water on-off and rotary flow-adjusting valve core, which comprises a valve body 1, a push operation member 2, a rotary adjusting member 3 and a central rod 4;
The valve body 1 comprises a water inlet 11, a water outlet 12, and a first flow passage 13 and a second flow passage 14 communicating between the water inlet 11 and the water outlet 12;
A first sealing component and a second sealing component are disposed at different positions in the valve body 1; the push operation member 2 is used to drive the central rod 4 and the first sealing component to move between a first position and a second position; when the central rod 4 and the first sealing component are at a first position, the first sealing component seals the first flow passage 13, and the central rod 4 cooperates with the second sealing component to seal the second flow passage 14; and when the central rod 4 and the first sealing component are at a second position, the first sealing component opens the first flow passage 13, and the central rod 4 disengages from the second sealing component to open the second flow passage 14;
The rotary adjusting member is used to control the first sealing component to move between the second position and a third position through a linkage control mechanism to adjust a water outlet flow rate of the first flow passage 13 when the central rod 4 is at the second position, and the third position is between the second position and the first position; during a movement of the first sealing component between the second position and the third position controlled by the rotary adjusting member through the linkage control mechanism, the first sealing component has 1, 2, 3, 4, 5......, n positions, and the rotary adjusting member can control the first sealing component to stay at any one of the n positions, when staying at different positions, the water outlet flow rate of the first flow passage 13 will vary, so as to achieve a stepless flow rate adjustment; and when the central rod 4 and the first sealing component are at the third position, the first sealing component seals the first flow passage 13, and the second flow passage 14 maintains communication.

The aforementioned push-operated water on-off and rotary flow-adjusting valve core, by setting the second flow passage 14, during a rotary flow-adjusting process, a size of the first flow passage 13 can be adjusted by rotation, the second flow passage 14 remains in a normally open state with a fixed and non-adjustable flow rate, water from two paths converges for discharge, so that a minimum flow rate of a product is determined by the second flow passage 14. When the first flow passage 13 is adjusted by rotation so that the flow rate of the first flow passage 13 is zero, a minimum flow rate of the valve core is the flow rate of the second flow passage 14, and the flow rate is stable, so that the value of the minimum flow rate of the product can be accurately controlled within a small flow rate range during mass production, and control accuracy and stability of the flow rate of the product are improved.
To achieve water on-off, the first sealing component is a pilot valve, which comprises a pilot valve seat 15 and a diaphragm 16 fixed to the pilot valve seat 15, and the diaphragm 16 comprises a pressure relief hole 161 for the central rod 4 to pass through and a water supplement port 162 with a diameter smaller than that of the pressure relief hole 161; the pilot valve and a middle seat 18 of the valve body 1 form a pressure chamber 163; and the central rod 4 comprises a first part 41 and a second part 42, and a diameter of the second part 42 is larger than that of the first part 41;

When the central rod 4 is at the first position, the second part 42 is disposed in the pressure relief hole 161 and seals the pressure relief hole 161, external water enters into the pressure chamber 163 through the water supplement port 162 so that a pressure inside the pressure chamber 163 increases, and the pilot valve moves downward under the pressure inside the pressure chamber 163 to drive the diaphragm 16 to deform downward to seal the first flow passage 13, achieving water shut-off of the first flow passage 13; and when the central rod 4 is at the second position, the first part 41 is disposed in the pressure relief hole 161, there is a gap between the first part 41 and the pressure relief hole 161 to open the pressure relief hole 161 as a diameter of the first part 41 is relatively small, and the water in the pressure chamber 163 flows out of the pressure relief hole 161 to lead to a decrease in the water pressure inside the pressure chamber 163, a pressure outside the pressure chamber 163 is greater than the pressure inside the pressure chamber 163, at this time, the pilot valve moves upward under the pressure outside the pressure chamber 163 to drive the diaphragm 16 to deform upward to release the seal of the first flow passage 13, achieving water turn-on of the first flow passage 13.

In addition, in this embodiment, a communication position of the second flow passage 14 and the water inlet 11 is the pressure relief hole 161. The pressure relief hole 161 is opened when the central rod 4 is at the second position. Therefore, during a flow-adjusting process, water can continuously enter into the pressure chamber 163 from the water supplement port 162 and then flow out of the pressure relief hole 161, ensuring that the second flow passage 14 is always in an open state. When the central rod 4 is at the first position, the pressure relief hole 161 has been closed, so the second flow passage 14 is naturally closed.
Therefore, to achieve water on-off operation, the central rod 4 and the pilot valve can move from the first position to the second position or move from the second position to the first position, and the push operation member 2 needs to be pushed to drive the central rod 4 to move. Specifically, the push operation member 2 comprises a handle rod 21, and a boss 22 is fixedly disposed in the handle rod 21; and a water-on spring 45 is sleeved over an outer side of the central rod 4;

The handle rod 21 is at a high position or a low position under external force, when the handle rod 21 is at the low position, the boss 22 abuts the central rod 4 to drive the central rod 4 and the pilot valve to be at the first position, and the central rod 4 squeezes the water-on spring 45 to accumulate elastic reset force; and when the handle rod 21 is at the high position, the boss 22 is separated from the central rod 4, and the central rod 4 and the pilot valve are driven to move to the second position by the reset force of the water-on spring 45.

The aforementioned structure can achieve water shut-off and water turn-on operations. Therefore,an flow-adjusting operation in a water-on state needs to rely on the rotary adjusting member 3 and the linkage control mechanism, and in this embodiment, the linkage control mechanism is an adjusting seat 6; and a function of the rotary adjusting member 3 is to rotate under the external force from the user. The rotary adjusting member 3 directly acts on the pilot valve through the adjusting seat 6 to drive the pilot valve to move between the second position and the third position, thereby driving the diaphragm 16 to deform.

In addition, the adjusting seat 6 comprises a convex column 61 extending into the pressure chamber 163; when the rotary adjusting member 3 rotates to drive the adjusting seat 6 to move, the convex column 61 abuts the pilot valve and drives the pilot valve to move between the second position and the third position to adjust the water outlet flow rate of the first flow passage 13. When the pilot valve is at the third position, the diaphragm 16 seals the first flow passage 13. During a movement of the pilot valve driven by the convex column 61, a distance between the diaphragm 16 and the first flow passage 13 becomes smaller, and water output rate also decreases accordingly.

In this embodiment, the adjusting seat 6 abuts an adjusting spring 62, and the adjusting spring 62 accumulates elastic reset force during the movement of the pilot valve from the second position to the third position. In addition, the adjusting seat 6 extends radially outward to form a lug 63 in abutting fit with a lower end surface of the rotary adjusting member 3, and the lower end surface of the rotary adjusting member 3 is an inclined surface 31 that gradually rises along a rotation direction; in this way, when the rotary adjusting member 3 rotates relative to the adjusting seat 6, the lug 63 on the adjusting seat 6 will move to different positions of the inclined surface 31, for example, when the lug 63 moves to a highest position of the inclined surface 31, the central rod 4 is at the second position, and when the lug 63 moves to a lowest position of the inclined surface 31, the central rod 4 is at the third position. When the lug 63 moves from the highest position to the lowest position of the inclined surface 31, an extrusion force is generated between the inclined surface 31 and the lug 63 to drive the adjusting seat 6 to move downward, and at this time, the adjusting seat 6 squeezes the adjusting spring 62. When the lug 63 moves from the lowest position to the highest position of the inclined surface 31, the extrusion force between the inclined surface 31 and the lug 63 disappears, and the adjusting spring 62 releases the elastic reset force to drive the adjusting seat 6 to move upward.

To form the aforementioned pressure chamber 163, the valve body 1 further comprises the middle seat 18, the middle seat 18, the diaphragm 16 and the pilot valve seat 15 define the pressure chamber 163, and the middle seat 18 comprises a second avoidance channel 181 for the central rod 4 to pass through; and a second sealing ring 182 adapted to the central rod 4 is disposed on an inner wall of the second avoidance channel 181. In this way, the central rod 4 forms a sealing fit with the second avoidance channel 181 via the second sealing ring 182 to avoid water leakage during passage.

Similarly, the pilot valve seat 15 also comprises a first avoidance channel 151 for the central rod 4 to pass through. It can prevent the water-on spring 45 from independently driving the central rod 4 to reset, resulting in a separation of the central rod 4 and the pilot valve. In this embodiment, the central rod 4 comprises an inclined surface 47, and the pilot valve seat 15 comprises a protrusion 1511 adapted to the inclined surface in the first avoidance channel 151; and during a reset process of the central rod 4 driven by the water-on spring 45, the inclined surface 47 will abut the protrusion 1511, so that the central rod 4 and the pilot valve seat 15 are linked and the pilot valve seat 15 also moves from the first position to the second position. During the flow-adjusting process, the rotary adjusting member 3 directly acts on the pilot valve through the adjusting seat 6 to drive the pilot valve seat 15 on the pilot valve to move up and down, the protrusion 1511 on the pilot valve seat 15 cooperates with the inclined surface 47 on the central rod 4 to drive the central rod 4 to move up and down synchronously, thus passing through the second flow passage 161, which remains normally open with a constant flow rate, from the pressure relief hole 14 during the movement, variation of the flow rate during the flow-adjusting process is not caused by the up and down movement of the central rod 4, and the rotary adjusting member 3 directly acts on the pilot valve through the adjusting seat 6 to drive the pilot valve to move up and down to achieve the variation of the flow rate. Another alternative way is as follows, a middle of the central rod 4 comprises an inclined surface, a protrusion adapted to the inclined surface is disposed at a position of the middle seat 18, so that during the flow-adjusting process, when the rotary adjusting member 3 directly acts on the pilot valve through the adjusting seat 6 to drive the pilot valve to move, the central rod 4 is not linked to move, the central rod 4 will not move up and down during the flow-adjusting process, and it can also prevent the water-on spring 45 from independently driving the central rod 4 to reset during the water turn-on process to result in the separation of the central rod 4 and the pilot valve.

In the aforementioned structure, the water on-off operation is achieved by pushing the handle rod 21, and the flow-adjusting operation is achieved by rotating the rotary adjusting member 3, which requires pushing and rotating different parts of the valve core, and operation logic is not friendly enough. Therefore, in this embodiment, a side surface of the handle rod 21 comprises a groove 211, and the rotary adjusting member 3 comprises a protrusion 312 for being placed in the groove 211, so that the handle rod 21 and the rotary adjusting member 3 are in linkage fit in the rotation direction. In this way, the handle rod 21 rotates to also drive the rotary adjusting member 3 to rotate, and all user operations can be achieved through the handle rod 21.

Finally, to limit a rotation range of the rotary adjusting member 3, the valve body 1 comprises a shell 17 wrapping an outer side of the rotary adjusting member 3, and the shell 17 comprises a first position-limiting boss 171 along a rotation path of the rotary adjusting member 3; the rotary adjusting member 3 comprises a second position-limiting boss 32 corresponding to the first position-limiting boss 171; and the first position-limiting boss 171 and the second position-limiting boss 32 are used to limit the rotation range of the rotary adjusting member 3. In this way, when the rotary adjusting member 3 rotates until the first position-limiting boss 171 abuts the second position-limiting boss 32, the rotary adjusting member 3 stops to rotate along the current rotation direction.

### Embodiment 3

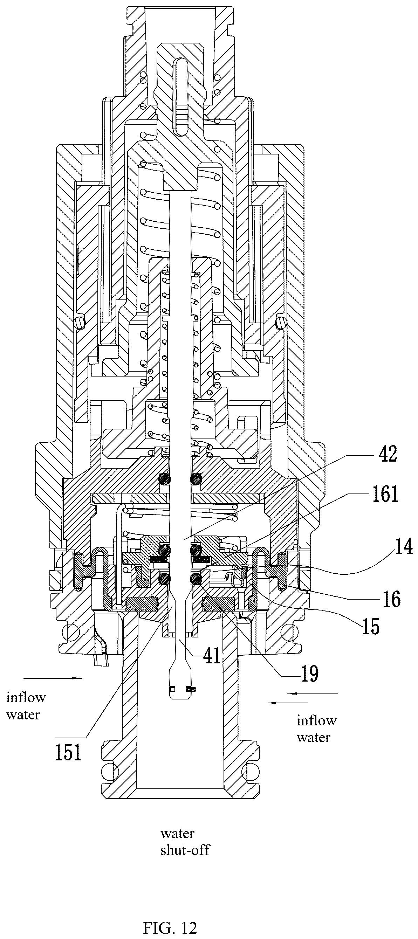

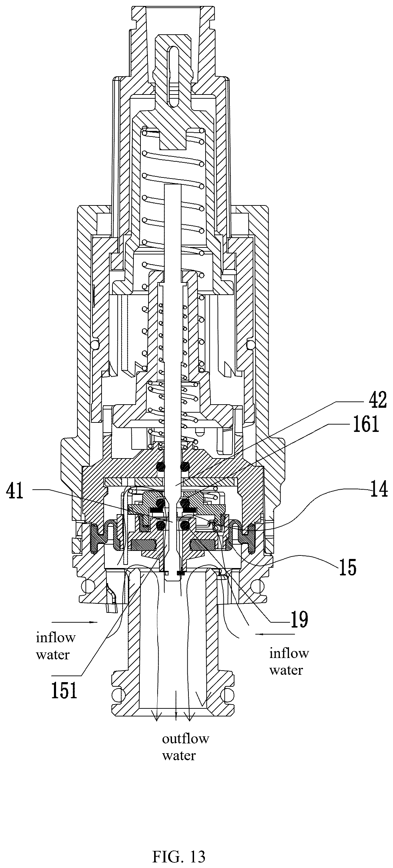

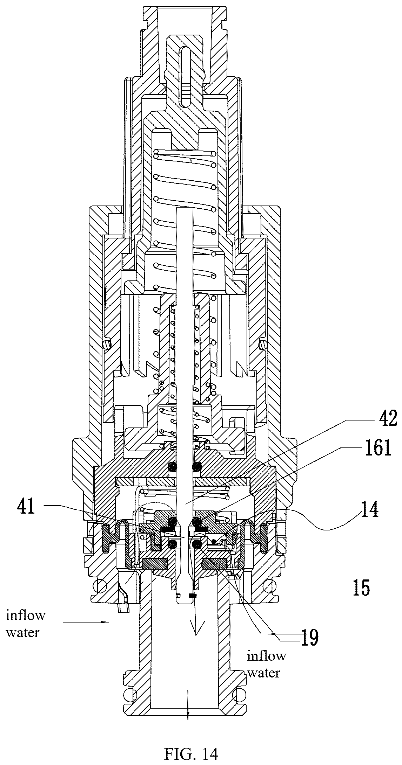

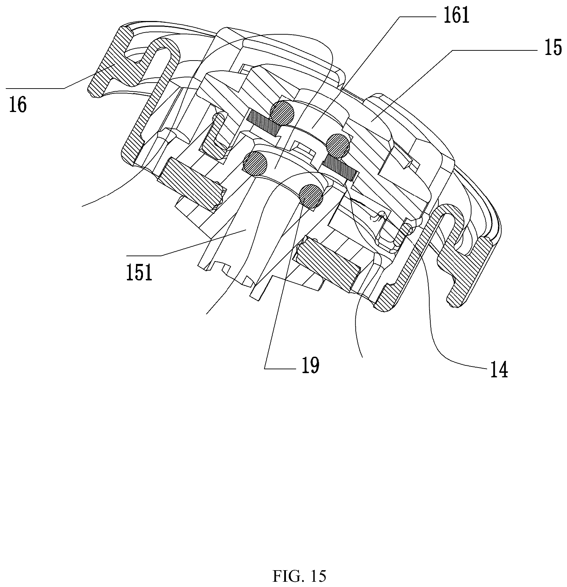

Referring to FIGS. 12-15, in this embodiment, the second flow passage is disposed on the pilot valve seat 15, and the diaphragm 16 comprises an avoidance opening at a position corresponding to an outlet of the second flow passage 14.

As the pilot valve seat 15 comprises a first avoidance channel 151 for the central rod to pass through, the second flow passage 14 can communicate with the water outlet 12 through the first avoidance channel 151 and communicate with the water inlet 11 through the avoidance opening. To close the second flow passage 14, in this embodiment, a sealing member 19 used as the second sealing component is disposed on the inner wall of the first avoidance channel 15.

Correspondingly, the central rod 4 comprises the first part 41 and the second part 42, and the diameter of the second part 42 is larger than that of the first part 41; when the central rod 4 is at the first position, the second part 42 is disposed in the pressure relief hole 161 and seals the pressure relief hole 161, the diaphragm 16 seals the first flow passage 13 under the pressure inside the pressure chamber, and the second part 42 cooperates with the sealing member 19 to close the second flow passage 14; when the central rod 4 is at the second position, the first part 41 is disposed in the pressure relief hole 161 and opens the pressure relief hole 161, the diaphragm 16 releases the seal of the first flow passage 13 under the pressure outside the pressure chamber, and the second part 42 disengages from the sealing member 19 to open the second flow passage 14. When the central rod 4 is at the third position, the second part 42 is disposed in the pressure relief hole 161 and seals the pressure relief hole 161, the diaphragm 16 seals the first flow passage 13 under the pressure inside the pressure chamber, and at this time, the second part 42 disengages from the sealing member 19 to open the second flow passage 14, thus forming a water outlet state with the minimum flow rate.

The rest of the structure is the same as that of Embodiment 1 and will not be repeated here.

### Embodiment 4

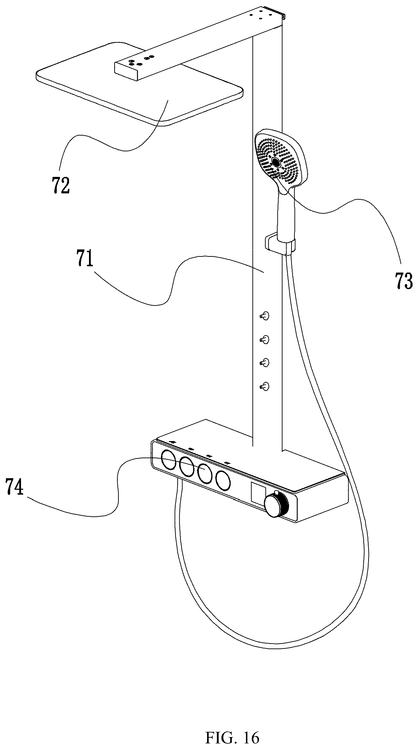

Referring to FIG. 16, this embodiment provides a shower 7, it comprises a shower rod 71, an overhead shower head 72 and a hand-held shower head 73, and it further comprises the push-operated water on-off and rotary flow-adjusting valve core 74 according to Embodiment 1, Embodiment 2 or Embodiment 3.

### Embodiment 5

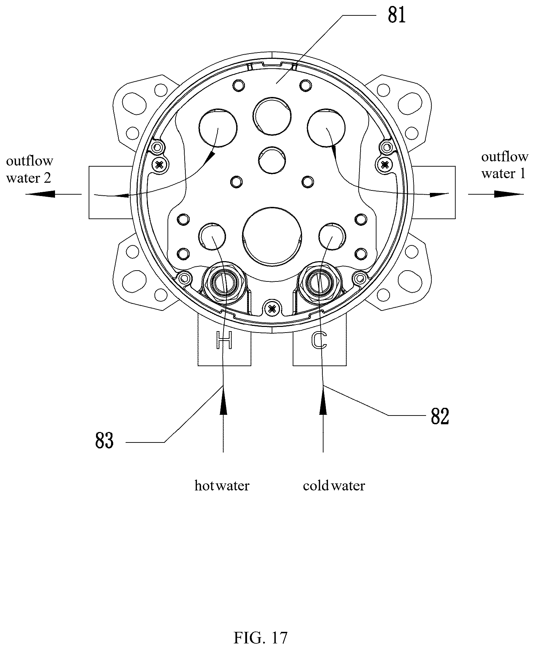

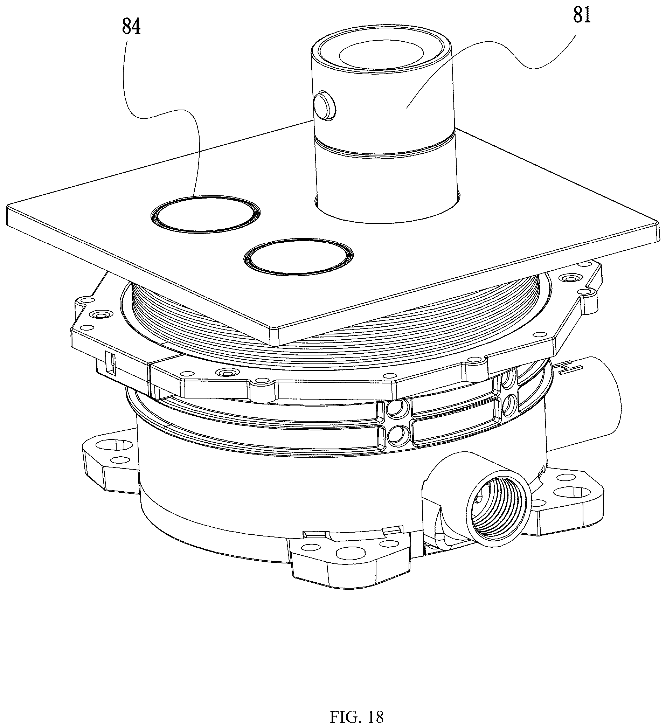

Referring to FIGS. 17 and 18, this embodiment provides a shower controller 8, which comprises a temperature-regulating valve core 81, a cold water flow path 82 and a hot water flow path 83 are connected into the temperature-regulating valve core 81 to output mixed water, and the push-operated water on-off and rotary flow-adjusting valve core 84 according to Embodiment 1, Embodiment 2 or Embodiment 3 is further disposed downstream of the temperature-regulating valve core 81.

### Embodiment 6

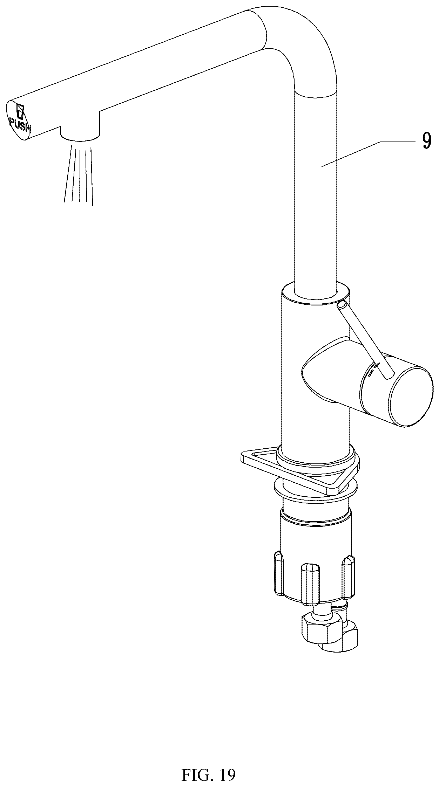

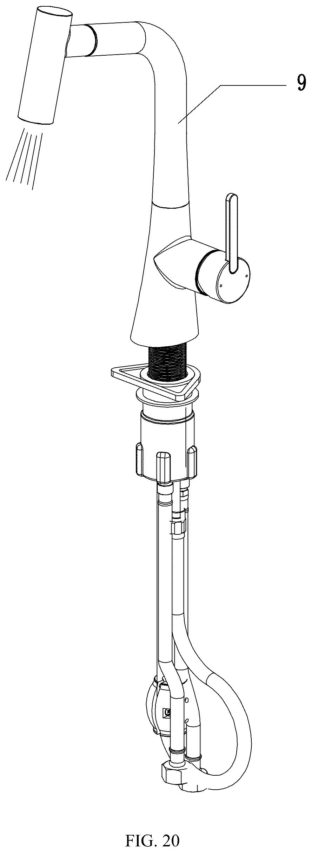

Referring to FIGS. 19 and 20, this embodiment also provides a faucet 9, which is assembled with the push-operated water on-off and rotary flow-adjusting valve core according to Embodiment 1, 2 or 3. The faucet 9 can be a faucet of a fixed type or a pulling type.

The invention may be summarized as follows: The present disclosure discloses a push-operated water on-off and rotary flow-adjusting valve core, a push operation member is used to drive a central rod and a first sealing component to move between a first position and a second position; when the central rod and the first sealing component are at the first position, the first sealing component seals a communication between a water inlet and the first flow passage, and the central rod cooperates with the second sealing component to close the second flow passage; when the central rod and the first sealing component are at the second position, the first sealing component opens the communication between the water inlet and the first flow passage, and the central rod disengages from the second sealing component to open the second flow passage; and the rotary adjusting member is used to control the first sealing component to move between the second position and a third position through a linkage control mechanism to adjust a water outlet flow rate of the first flow passage when the central rod is at the second position. The present disclosure further discloses a shower, a shower controller and a faucet assembled with the push-operated water on-off and rotary flow-adjusting valve core.

The invention may also be summarized as follows:
1. A push-operated water on-off and rotary flow-adjusting valve core, characterized in that: which comprises a valve body, a push operation member, a rotary adjusting member and a central rod;
   the valve body comprises a water inlet, a water outlet, and a first flow passage and a second flow passage communicating between the water inlet and the water outlet;
   a first sealing component and a second sealing component are disposed at different positions in the valve body; the push operation member is used to drive the central rod and the first sealing component to move between a first position and a second position; when the central rod and the first sealing component are at the first position, the first sealing component seals the first flow passage, and the central rod cooperates with the second sealing component to close the second flow passage; when the central rod and the first sealing component are at the second position, the first sealing component opens the first flow passage, and the central rod disengages from the second sealing component to open the second flow passage; and
   the rotary adjusting member is used to control the first sealing component to move between the second position and a third position through a linkage control mechanism to adjust a water outlet flow rate of the first flow passage when the central rod and the first sealing component are at the second position; the third position is between the second position and the first position; and when the central rod and the first sealing component are at the third position, the first sealing component seals the first flow passage, and the second flow passage maintains communication with the water inlet.
2. The push-operated water on-off and rotary flow-adjusting valve core according to item 1, characterized in that: the first sealing component is a pilot valve, which comprises a pilot valve seat and a diaphragm fixed to the pilot valve seat.
3. The push-operated water on-off and rotary flow-adjusting valve core according to item 2, characterized in that: the pilot valve comprises a water supplement port and a pressure relief hole for the central rod to pass through; and the pilot valve and the valve body form a pressure chamber; and
   the linkage control mechanism controls the central rod to move relative to the pressure relief hole to adjust a size of the pressure relief hole, so as to adjust a magnitude of a pressure inside the pressure chamber, so that the pilot valve moves between the second position and the third position under a pressure difference between inside and outside of the pressure chamber.
4. The push-operated water on-off and rotary flow-adjusting valve core according to item 3, characterized in that: the central rod comprises a first part and a second part, and a diameter of the second part is larger than that of the first part; and
   when the central rod is at the first position, the second part is disposed in the pressure relief hole and seals the pressure relief hole, and the diaphragm seals the first flow passage under the pressure inside the pressure chamber; and when the central rod is at the second position, the first part is disposed in the pressure relief hole and opens the pressure relief hole, and the diaphragm opens the first flow passage under a pressure outside the pressure chamber.
5. The push-operated water on-off and rotary flow-adjusting valve core according to any one or more of items 1 to 4, characterized in that: the linkage control mechanism is a guide seat; and when the central rod is at the second position, the guide seat is in linkage fit with the central rod; and
   the guide seat is in commutation fit with the rotary adjusting member to convert a rotation of the rotary adjusting member into a movement of the central rod from the second position to the third position.
6. The push-operated water on-off and rotary flow-adjusting valve core according to item 4 and/or 5, characterized in that: the central rod further comprises a transition part between the first part and the second part, and a diameter of the transition part gradually increases from an end close to the first part to the other end; and
   during the movement of the central rod from the second position to the third position, the transition part enters into the pressure relief hole to gradually reduce a water passing area of the pressure relief hole; and when the central rod moves to the third position, the second part is disposed in the pressure relief hole and seals the pressure relief hole, and the diaphragm seals the first flow passage under the pressure inside the pressure chamber.
7. The push-operated water on-off and rotary flow-adjusting valve core according to item 5 and/or 6, characterized in that: the guide seat comprises an avoidance opening for the push operation member to pass through, an inner wall of the avoidance opening extends radially inward to form a position-limiting surface, an upper end of the central rod extends radially outward to form a matching position-limiting surface, and when the central rod is at the second position, the position-limiting surface is in abutting fit with the matching position-limiting surface.
8. The push-operated water on-off and rotary flow-adjusting valve core according to any one or more of items 5 to 7, characterized in that: the rotary adjusting member is sleeved over an outer side of the guide seat, the guide seat extends radially outward to form a lug in abutting fit with a lower end surface of the rotary adjusting member, and the lower end surface of the rotary adjusting member is an inclined surface that gradually rises along a rotation direction; and when the lug moves to a highest position of the inclined surface, the central rod is at the second position, and when the lug moves to a lowest position of the inclined surface, the central rod is at the third position.
9. The push-operated water on-off and rotary flow-adjusting valve core according to any one or more of items 2 to 8, characterized in that: the rotary adjusting member directly acts on the pilot valve through the linkage control mechanism to drive the pilot valve to move between the second position and the third position.
10. The push-operated water on-off and rotary flow-adjusting valve core according to any one or more of items 1 to 9, characterized in that: the linkage control mechanism is an adjusting seat; the adjusting seat is in commutation fit with the rotary adjusting member to convert the rotation of the rotary adjusting member into a movement of the adjusting seat from the second position to the third position.
11. The push-operated water on-off and rotary flow-adjusting valve core according to item 10, characterized in that: the pilot valve and the valve body form a pressure chamber; and
   the adjusting seat comprises a convex column extending into the pressure chamber; when the rotary adjusting member rotates to drive the adjusting seat to move, the convex column drives the pilot valve to move between the second position and the third position to adjust the water outlet flow rate of the first flow passage.
12. The push-operated water on-off and rotary flow-adjusting valve core according to item 10 and/or 11, characterized in that: the adjusting seat extends radially outward to form a lug in abutting fit with a lower end surface of the rotary adjusting member, and the lower end surface of the rotary adjusting member is an inclined surface that gradually rises along a rotation direction; and when the lug moves to a highest position of the inclined surface, the diaphragm is at the second position, and when the lug moves to a lowest position of the inclined surface, the diaphragm is at the third position.
13. The push-operated water on-off and rotary flow-adjusting valve core according to any one or more of items 10 to 12, characterized in that: the adjusting seat abuts an adjusting spring, and the adjusting spring accumulates elastic reset force during the movement of the adjusting seat from the second position to the third position.
14. The push-operated water on-off and rotary flow-adjusting valve core according to any one or more of items 1 to 13, characterized in that: the second flow passage is disposed below the first flow passage; the central rod further comprises a third part at an end of the first part away from the second part, and an inner wall of the second flow passage comprises a first sealing ring used as the second sealing component; when the central rod is at the first position, the third part is in sealing fit with the first sealing ring.
15. The push-operated water on-off and rotary flow-adjusting valve core according to any one or more of items 3 to 14, characterized in that: the second flow passage comprises the pressure relief hole.
16. The push-operated water on-off and rotary flow-adjusting valve core according to any one or more of items 2 to 15, characterized in that: the pilot valve seat comprises the second flow passage, and the diaphragm comprises an avoidance opening at a position corresponding to an outlet of the second flow passage.
17. The push-operated water on-off and rotary flow-adjusting valve core according to any one or more of items 2 to 16, characterized in that: the pilot valve seat comprises a first avoidance channel for the central rod to pass through, and an inner wall of the first avoidance channel comprises a sealing member used as the second sealing component.
18. The push-operated water on-off and rotary flow-adjusting valve core according to any one or more of items 3 to 17, characterized in that: the central rod comprises a first part and a second part, and a diameter of the second part is larger than that of the first part; and
   when the central rod is at the first position, the second part is disposed in the pressure relief hole and seals the pressure relief hole, the diaphragm seals the first flow passage under the pressure inside the pressure chamber, and the second part cooperates with the sealing member to close the second flow passage; and when the central rod is at the second position, the first part is disposed in the pressure relief hole and opens the pressure relief hole, the diaphragm opens the first flow passage under a pressure outside the pressure chamber, and the second part disengages from the sealing member to open the second flow passage.
19. The push-operated water on-off and rotary flow-adjusting valve core according to any one or more of items 1-18, characterized in that: the push operation member comprises a handle rod, and a boss is fixedly disposed in the handle rod; and a water-on spring is sleeved over an outer side of the central rod; and
   the handle rod is at a high position or a low position under external force, when the handle rod is at the low position, the boss abuts the central rod to drive the central rod to be at the first position, and the central rod squeezes the water-on spring to accumulate elastic reset force; and when the handle rod is at the high position, the boss is separated from the central rod, and the central rod is driven to move to the second position by the reset force of the water-on spring.
20. The push-operated water on-off and rotary flow-adjusting valve core according to item 19, characterized in that: a side surface of the handle rod comprises a groove, and the rotary adjusting member comprises a protrusion for being placed in the groove, so that the handle rod and the rotary adjusting member are in linkage fit in the rotation direction.
21. The push-operated water on-off and rotary flow-adjusting valve core according to any one or more of items 1-20, characterized in that: the valve body comprises a shell wrapping an outer side of the rotary adjusting member, and the shell comprises a first position-limiting boss along a rotation path of the rotary adjusting member; the rotary adjusting member comprises a second position-limiting boss corresponding to the first position-limiting boss; and the first position-limiting boss and the second position-limiting boss are used to limit a rotation range of the rotary adjusting member.
22. A shower, which comprises a shower rod, an overhead shower head and a hand-held shower head, characterized in that, which further comprises the push-operated water on-off and rotary flow-adjusting valve core according to any one or more of items 1-21.
23. A shower controller, which comprises a temperature-regulating valve core, a cold water flow path and a hot water flow path are connected to the temperature-regulating valve core to output mixed water, characterized in that, the push-operated water on-off and rotary flow-adjusting valve core according to any one or more of items 1-21 is further disposed downstream of the temperature-regulating valve core.
24. A faucet, characterized in that: which is assembled with the push-operated water on-off and rotary flow-adjusting valve core according to any one or more of items 1-21.

The preceding description is only preferred specific implementations of the present disclosure and is not intended to limit the patent scope of the present disclosure, all technical equivalent modifications fall within the protection scope of the present disclosure provided that they are obtained using the content of the specification of the present disclosure.

## Claims

1. A push-operated water on-off and rotary flow-adjusting valve core, **characterized in that**: which comprises a valve body, a push operation member, a rotary adjusting member and a central rod;
the valve body comprises a water inlet, a water outlet, and a first flow passage and a second flow passage communicating between the water inlet and the water outlet;
a first sealing component and a second sealing component are disposed at different positions in the valve body; the push operation member is used to drive the central rod and the first sealing component to move between a first position and a second position; when the central rod and the first sealing component are at the first position, the first sealing component seals the first flow passage, and the central rod cooperates with the second sealing component to close the second flow passage; when the central rod and the first sealing component are at the second position, the first sealing component opens the first flow passage, and the central rod disengages from the second sealing component to open the second flow passage; and
the rotary adjusting member is used to control the first sealing component to move between the second position and a third position through a linkage control mechanism to adjust a water outlet flow rate of the first flow passage when the central rod and the first sealing component are at the second position; the third position is between the second position and the first position; and when the central rod and the first sealing component are at the third position, the first sealing component seals the first flow passage, and the second flow passage maintains communication with the water inlet.

2. The push-operated water on-off and rotary flow-adjusting valve core according to claim 1, **characterized in that**: the first sealing component is a pilot valve, which comprises a pilot valve seat and a diaphragm fixed to the pilot valve seat, wherein preferably: the pilot valve comprises a water supplement port and a pressure relief hole for the central rod to pass through; and the pilot valve and the valve body form a pressure chamber; and
the linkage control mechanism controls the central rod to move relative to the pressure relief hole to adjust a size of the pressure relief hole, so as to adjust a magnitude of a pressure inside the pressure chamber, so that the pilot valve moves between the second position and the third position under a pressure difference between inside and outside of the pressure chamber, wherein more preferably: the central rod comprises a first part and a second part, and a diameter of the second part is larger than that of the first part; and
when the central rod is at the first position, the second part is disposed in the pressure relief hole and seals the pressure relief hole, and the diaphragm seals the first flow passage under the pressure inside the pressure chamber; and when the central rod is at the second position, the first part is disposed in the pressure relief hole and opens the pressure relief hole, and the diaphragm opens the first flow passage under a pressure outside the pressure chamber.

3. The push-operated water on-off and rotary flow-adjusting valve core according to any one or more of claims 1 to 2, **characterized in that**: the linkage control mechanism is a guide seat; and when the central rod is at the second position, the guide seat is in linkage fit with the central rod; and
the guide seat is in commutation fit with the rotary adjusting member to convert a rotation of the rotary adjusting member into a movement of the central rod from the second position to the third position, wherein preferably: the central rod further comprises a transition part between the first part and the second part, and a diameter of the transition part gradually increases from an end close to the first part to the other end; and
during the movement of the central rod from the second position to the third position, the transition part enters into the pressure relief hole to gradually reduce a water passing area of the pressure relief hole; and when the central rod moves to the third position, the second part is disposed in the pressure relief hole and seals the pressure relief hole, and the diaphragm seals the first flow passage under the pressure inside the pressure chamber, and/or wherein preferably: the guide seat comprises an avoidance opening for the push operation member to pass through, an inner wall of the avoidance opening extends radially inward to form a position-limiting surface, an upper end of the central rod extends radially outward to form a matching position-limiting surface, and when the central rod is at the second position, the position-limiting surface is in abutting fit with the matching position-limiting surface, and/or wherein preferably: the rotary adjusting member is sleeved over an outer side of the guide seat, the guide seat extends radially outward to form a lug in abutting fit with a lower end surface of the rotary adjusting member, and the lower end surface of the rotary adjusting member is an inclined surface that gradually rises along a rotation direction; and when the lug moves to a highest position of the inclined surface, the central rod is at the second position, and when the lug moves to a lowest position of the inclined surface, the central rod is at the third position.

4. The push-operated water on-off and rotary flow-adjusting valve core according to any one or more of claims 2 to 3, **characterized in that**: the rotary adjusting member directly acts on the pilot valve through the linkage control mechanism to drive the pilot valve to move between the second position and the third position, wherein preferably: the linkage control mechanism is an adjusting seat; the adjusting seat is in commutation fit with the rotary adjusting member to convert the rotation of the rotary adjusting member into a movement of the adjusting seat from the second position to the third position, wherein preferably: the pilot valve and the valve body form a pressure chamber; and
the adjusting seat comprises a convex column extending into the pressure chamber; when the rotary adjusting member rotates to drive the adjusting seat to move, the convex column drives the pilot valve to move between the second position and the third position to adjust the water outlet flow rate of the first flow passage.

5. The push-operated water on-off and rotary flow-adjusting valve core according to claim 4, **characterized in that**: the adjusting seat extends radially outward to form a lug in abutting fit with a lower end surface of the rotary adjusting member, and the lower end surface of the rotary adjusting member is an inclined surface that gradually rises along a rotation direction; and when the lug moves to a highest position of the inclined surface, the diaphragm is at the second position, and when the lug moves to a lowest position of the inclined surface, the diaphragm is at the third position, wherein preferably: the adjusting seat abuts an adjusting spring, and the adjusting spring accumulates elastic reset force during the movement of the adjusting seat from the second position to the third position.

6. The push-operated water on-off and rotary flow-adjusting valve core according to any one or more of claims 1 to 5, **characterized in that**: the second flow passage is disposed below the first flow passage; the central rod further comprises a third part at an end of the first part away from the second part, and an inner wall of the second flow passage comprises a first sealing ring used as the second sealing component; when the central rod is at the first position, the third part is in sealing fit with the first sealing ring.

7. The push-operated water on-off and rotary flow-adjusting valve core according to any one or more of claims 3 to 6, **characterized in that**: the second flow passage comprises the pressure relief hole.

8. The push-operated water on-off and rotary flow-adjusting valve core according to any one or more of claims 2 to 7, **characterized in that**: the pilot valve seat comprises the second flow passage, and the diaphragm comprises an avoidance opening at a position corresponding to an outlet of the second flow passage.

9. The push-operated water on-off and rotary flow-adjusting valve core according to any one or more of claims 2 to 8, **characterized in that**: the pilot valve seat comprises a first avoidance channel for the central rod to pass through, and an inner wall of the first avoidance channel comprises a sealing member used as the second sealing component.

10. The push-operated water on-off and rotary flow-adjusting valve core according to any one or more of claims 3 to 9, **characterized in that**: the central rod comprises a first part and a second part, and a diameter of the second part is larger than that of the first part; and
when the central rod is at the first position, the second part is disposed in the pressure relief hole and seals the pressure relief hole, the diaphragm seals the first flow passage under the pressure inside the pressure chamber, and the second part cooperates with the sealing member to close the second flow passage; and when the central rod is at the second position, the first part is disposed in the pressure relief hole and opens the pressure relief hole, the diaphragm opens the first flow passage under a pressure outside the pressure chamber, and the second part disengages from the sealing member to open the second flow passage.

11. The push-operated water on-off and rotary flow-adjusting valve core according to any one or more of claims 1-10, **characterized in that**: the push operation member comprises a handle rod, and a boss is fixedly disposed in the handle rod; and a water-on spring is sleeved over an outer side of the central rod; and
the handle rod is at a high position or a low position under external force, when the handle rod is at the low position, the boss abuts the central rod to drive the central rod to be at the first position, and the central rod squeezes the water-on spring to accumulate elastic reset force; and when the handle rod is at the high position, the boss is separated from the central rod, and the central rod is driven to move to the second position by the reset force of the water-on spring, wherein preferably: a side surface of the handle rod comprises a groove, and the rotary adjusting member comprises a protrusion for being placed in the groove, so that the handle rod and the rotary adjusting member are in linkage fit in the rotation direction.

12. The push-operated water on-off and rotary flow-adjusting valve core according to any one or more of claims 1-11, **characterized in that**: the valve body comprises a shell wrapping an outer side of the rotary adjusting member, and the shell comprises a first position-limiting boss along a rotation path of the rotary adjusting member; the rotary adjusting member comprises a second position-limiting boss corresponding to the first position-limiting boss; and the first position-limiting boss and the second position-limiting boss are used to limit a rotation range of the rotary adjusting member.

13. A shower, which comprises a shower rod, an overhead shower head and a hand-held shower head, **characterized in that**, which further comprises the push-operated water on-off and rotary flow-adjusting valve core according to any one or more of claims 1-12.

14. A shower controller, which comprises a temperature-regulating valve core, a cold water flow path and a hot water flow path are connected to the temperature-regulating valve core to output mixed water, **characterized in that**, the push-operated water on-off and rotary flow-adjusting valve core according to any one or more of claims 1-12 is further disposed downstream of the temperature-regulating valve core.

15. A faucet, **characterized in that**: which is assembled with the push-operated water on-off and rotary flow-adjusting valve core according to any one or more of claims 1-12.
